# EUROPEAN PATENT APPLICATION

(11) **EP 3 750 933 A1**
(43) Date of publication of application: **16.12.2020**
(21) Application number: 19179683.8
(22) Date of filing: 12.06.2019
(51) Int. Cl.: C08G 18/00, C08G 18/22, C08G 18/76, C08G 18/78, C08G 59/22

(54) **METHOD FOR THE PRODUCTION OF EPOXY-GROUP TERMINATED POLYOXAZOLIDINONES**

(71) Applicant: Covestro Deutschland AG, 51373 Leverkusen (DE)
(72) Inventor: The designation of the inventor has not yet been filed
(74) Representative: Levpat

(57) **Abstract**

The invention is related to a process for producing an epoxy-group terminated polyoxazolidinone comprising the copolymerization of a polyisocyanate compound (A) with two or more isocyanate groups with a polyepoxide compound (B) with two or more epoxy groups in the presence of a specific catalyst (C), wherein the molar ratio of the epoxy groups of the polyepoxide compound (B) to the isocyanate groups of the polyisocyanate compound (A) is larger than 2:1 and less than 25:1, and wherein the copolymerization is operated in the absence of an additional solvent (D-1) with an boiling point higher than 170 °C, preferred, 165 °C, more preferred 160°C most preferred 150 °C at 1 bar (absolute). The invention is also related to the resulting epoxy-group terminated polyoxazolidinones.

## Description

The invention is related to a process for producing epoxy-group terminated polyoxazolidinones comprising the copolymerization of a polyisocyanate compound (A) with two or more isocyanate groups with a polyepoxide compound (B) with two or more epoxy groups in the presence of a specific catalyst (C), wherein the molar ratio of the epoxy groups of the polyepoxide compound (B) to the isocyanate groups of the polyisocyanate compound (A) is larger than 2:1 and less than 25:1, and wherein the copolymerization is operated in the absence of an additional solvent (D-1) with an boiling point higher than 170 °C, preferred, 165 °C, more preferred 160°C most preferred 150 °C at 1 bar (absolute). The invention is also related to the resulting epoxy-group terminated polyoxazolidinones.

Oxazolidinones are widely used structural motifs in pharmaceutical applications and the cycloaddition of epoxides and isocyanates seems to be a convenient one-pot synthetic route to it. Expensive catalysts, reactive polar solvents, long reaction times and low chemoselectivities are common in early reports for the synthesis of oxazolidinones (M. E. Dyen and D. Swern, Chem. Rev., 67, 197, 1967). Due to these disadvantages there was the need for alternative methods for the production of oxazolidinones especially for application of oxazolidinones as structural motif in polymer applications.

The scientific publication J. Polym. Sci. 8 (1970) 2759-2773 discloses polyoxazolidinones prepared from various bisepoxides and various diisocyanates in the presence of alkaline metal halide catalysts. A solution of equimolar bisepoxide and diisocyanate amounts is added dropwise to a reactor containing a LiCl catalyst dissolved in DMF under reflux conditions within 1 h and a subsequent post reaction of 12 to 23 h was carried out under reflux conditions in order to complete the reaction.

EP 0 113 575 A1 discloses a powder coating composition comprising an epoxy-terminated polyoxazolidinone, prepared by reacting a diepoxide with a diisocyanate, wherein the ratio of epoxide equivalents to isocyanate equivalents ranges from 10:1 to 1.1:1. The resulting polyoxazolidinones have an epoxy equivalent weight from 250 to 4000. In example 1, an epoxy-terminated polyoxazolidinone powder is prepared, wherein in a first step a urethane is formed by reaction of the toluene diisocyanate with a stoichiometric excess of ethanol in the presence of dibutyltindilaurate followed by the reaction of this urethane with an epoxide in the presence of triethyldiamine forming the oxazolidinone. In examples 2 and 3 epoxy-terminated polyoxyazolidinone powders were synthesized with epoxide equivalents to isocyanate equivalents of 1.6 and 1.96 in the presence of a tetraethylammonium bromide catalyst.

US 2002/0037975 A1 describes an oxazolidinone-ring containing epoxy resin, wherein the epoxy resin is prepared by firstly obtaining a blocked polyurethane diisocyanate by reaction of an diisocyanate with an alcohol and allowing it to react with a diepoxide, wherein the reaction may proceed in the presence of a tertiary amine catalyst and optionally a tin co-catalyst.

DE 37 20 759 A1 provides a process for the production of oligomeric oxazolidinone-containing polyepoxides based on bisepoxides and diisocyanates in the presence of a phosphonium carboxylates or halides as catalyst systems. In the disclosed examples, the ratio of NCO-groups of the applied diisocyanates to epoxy-groups of the applied bisepoxides is between 1:1.6 until 1:2.0 resulting in solid polyoxazolidinones with epoxy equivalent weights between 460 and 711.

In Pelzer et al. (European Polymer Journal 107 (2018)) oxazolidinone formation was investigated by reaction of 4,4-methylene diphenyl diisocyanate (MDI) with o-cresyl glycidyl ether (OGCE) or Bisphenol A diglycidyl ether (BADGE) in the presence of various tetra-n-butyl ammonium halides, wherein molar BADGE to MDI ratios up to 3 to 1 were applied. However, significant amounts of side products, i.e. isocyanurates, were detected.

Objective of the present invention was therefore to identify a simple one-step process for the preparation of epoxy-group terminated polyoxazolidinones with defined epoxy equivalent weights preferable in combination with a low polydispersity for further polymerization applications. In this context, side reactions, e.g. by formation of isocyanurates or polyurethanes should be reduced or avoided. In addition, the use of high-boiling solvents typically applied in oxazolidinone synthesis which need to be removed at high temperature should be avoided to reduce the number of side products, obtain less colored oxazolidinones, and result in a more energy-efficient process.

Surprisingly, it has been found that the problem can be solved by a process for producing an epoxy-group terminated polyoxazolidinone comprising the copolymerization of a polyisocyanate compound (A) with two or more isocyanate groups with a polyepoxide compound (B) with two or more epoxy groups in the presence of a catalyst (C);
wherein the molar ratio of the epoxy groups of the polyepoxide compound (B) to the isocyanate groups of the polyisocyanate compound (A) is larger than 2:1 and less than 25:1;
wherein the catalyst (C) is at least one compound selected from the group consisting of
Li(I), Rb(I), Cs(I), Ag(I), Au(I),
Mg(II), Ca(II), Sr(II), Ba(II), Dy(II), Yb(II), Cu(II), Zn(II), V(II), Mo(II), Mn(II), Fe(II), Co(II) Ni(II), Pd(II), Pt(II), Ge(II), Sn(II),
Sc(III), Y(III), La(III), Ce(III), Pr(III), Nd(III), Sm(III), Eu(III), Gd(III), Tb(III), Dy(III), Ho(III), Er(III), Tm(III), Yb(III), Lu(III), Hf(III), Nb(III), Ta(III), Cr(III), Ru(III), Os(III), Rh(III), Ir(III), Al(III), Ga(III), In(III), Tl(III), Ge(III),
Ce(IV), Ti(IV), Zr(IV), Hf(IV), Nb(IV), Mo(IV), W(IV), Ir(IV), Pt(IV), Sn(IV), Pb(IV),
Nb(V), Ta(V), Bi(V),
Mo(VI), W(VI), and
compounds represented by the formula (I)

[M(R1)(R2)(R3)(R4)]+n Yn- (I)

wherein M is phosphorous or antimony, preferred phosphorous;
wherein (R1), (R2), (R3), (R4) are independently of one another selected from the group comprising linear or branched alkyl groups containing 1 to 22 carbon atoms, optionally substituted with heteroatoms and/or heteroatom containing substituents, cycloaliphatic groups containing 3 to 22 carbon atoms, optionally substituted with heteroatoms and/or heteroatom containing substituents, C1 to C3 alkyl-bridged cycloaliphatic groups containing 3 to 22 carbon atoms, optionally substituted with heteroatoms and/or heteroatom containing substituents and aryl groups containing 6 to 18 carbon atoms, optionally substituted with one or more alkyl groups containing 1 to 10 carbon atoms and/or heteroatom containing substituents and/or heteroatoms,
wherein Y is a halide, carbonate, nitrate, sulfate or phosphate anion, more preferred a halide or carbonate and
wherein n is an integer of 1, 2 or 3;
and wherein the copolymerization is operated in the absence of an additional solvent (D-1) with an boiling point higher than 170 °C, preferred, 165 °C, more preferred 160°C most preferred 150 °C at 1 bar (absolute).

As used herein, the term "polyoxazolidinone" is meant to denote compounds containing at least two oxazolidinone groups in the molecule. The term "epoxy-group terminated" polyoxazolidinone is related to polyoxazolidinone compounds, wherein the molar ratio of the epoxy groups of the polyepoxide compound (B) to the isocyanate groups of the polyisocyanate compound (A) is larger than 2:1, so no terminal isocyanate groups are present within the polyoxazolidinone compound according to the present invention.

In an embodiment of the method according to the invention the copolymerization process is performed at a reaction temperature of ≥ 130 °C to ≤ 280 °C, preferably at a temperature of ≥ 140 °C to ≤ 240 °C, more preferred at a temperature of ≥ 155 °C to ≤ 210 °C. If temperatures below 130 °C are set, the reaction is generally very slow. At temperatures above 280 °C, the amount of undesirable secondary products increases considerably.

As used herein, the term "polyisocyanate compound" is meant to denote compounds having two or more isocyanate groups.

In an embodiment of the method according to the invention, the polyisocyanate compound (A) is an aliphatic or cycloaliphatic polyisocyanate compound (A-1), and/or an araliphatic or aromatic polyisocyanate compound (A-2), preferable an aromatic and/or araliphatic polyisocyanate compound (A-2).

In an embodiment of the method according to the invention, the polyisocyanate compound (A) is at least one polyisocyanate accessible in various ways, for example by phosgenation in the liquid or gas phase or by a phosgene-free route, for example by thermal urethane cleavage.

In an embodiment of the method according to the invention, the polyisocyanate compound (A) is at least one compound selected from the group consisting of polyisocyanates from the molecular weight range of 140 g/mol to 600 g/mol having aliphatically, cycloaliphatically, araliphatically and/or aromatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,12-diisocyanatododecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, 1-isocyanato-1-methyl-4(3)isocyanatomethylcyclohexane, bis(isocyanatomethyl)norbornane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates, and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate, and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828 or are mixtures of at least two such polyisocyanates, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

More preferred, the polyisocyanate compound (A) is at least one compound selected from the group consisting of polyisocyanates from the molecular weight range of 140 g/mol to 600 g/mol having aliphatically, cycloaliphatically, araliphatically and/or aromatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 1,5-diisocyanato-2,2-dimethylpentane, 2,2,4- or 2,4,4-trimethyl-1,6-diisocyanatohexane, 1,8-diisocyanatooctane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'-and 4,4'-diisocyanatodicyclohexylmethane (H12-MDI), 4,4'-diisocyanato-2,2-dicyclohexyl propane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299, and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,4-bis(2-isocyanatoethyl)benzene, 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, 1,3-propylene glycol diphenylether diisocyanate, triisocyanatobenzene, 2,4,6-triisocyanatotoluene, trimethylbenzene triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

And most preferred, the polyisocyanate compound (A) is at least one compound selected from the group consisting of 1,5-diisocyanatopentane (pentamethylene diisocyanate, PDI), 1,6-diisocyanatohexane (hexamethylene diisocyanate, HDI), 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI).

A mixture of two or more of the aforementioned polyisocyanate compounds (A) can also be used.

As used herein, the term "aromatic polyisocyanate compound" is meant to denote compounds having two or more isocyanate groups and aromatic moieties.

In a more preferred embodiment of the method according to the invention the polyisocyanate compound (A) is an aromatic and/or araliphatic polyisocyanate compound (A-2).

In a preferred embodiment of the method according to the invention, the aromatic polyisocyanate compound (A-2) is at least one compound and is selected from the group consisting of araliphatic and/or aromatic diisocyanates and triisocyanate are of the molecular weight range from 160 g/mol to 600 g/mol, such as 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,4-bis(2-isocyanatoethyl)benzene, 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, 1,3-propylene glycol diphenylether diisocyanate, triisocyanatobenzene, 2,4,6-triisocyanatotoluene, trimethylbenzene triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

In a more preferred embodiment of the method according to the invention, the aromatic polyisocyanate compound (A-2) is at least one compound and is selected from the group consisting of araliphatic and/or aromatic diisocyanates and triisocyanate are of the molecular weight range from 160 g/mol to 600 g/mol, such as 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2'-, 2,4'-and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate, and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828 or are mixtures of at least two such polyisocyanates, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

In a most preferred embodiment of the method according to the invention, the aromatic polyisocyanate compound (A-2) is at least one compound and is selected from the group consisting of 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI).

A mixture of two or more of the aromatic polyisocyanate compounds (A-2) can also be used.

As used herein, the term "aliphatic polyisocyanate compound" is meant to denote compounds having two or more isocyanate groups and no aromatic moieties.

In a less preferred embodiment of the method according to the invention the polyisocyanate compound (A) is an aliphatic or cycloaliphatic polyisocyanate (A-1).

In an embodiment of the method according to the invention, the aliphatic polyisocyanate compound (A-1) is at least one compound selected from the group consisting of polyisocyanates from the molecular weight range of 140 g/mol to 400 g/mol having aliphatically or cycloaliphatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,12-diisocyanatododecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, 1-isocyanato-1-methyl-4(3)isocyanatomethylcyclohexane, bis(isocyanatomethyl)norbornane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates.

More preferred, the aliphatic polyisocyanate compound (A-1) is at least one compound selected from the group consisting of polyisocyanates from the molecular weight range of 140 g/mol to 400 g/mol having aliphatically, cycloaliphatically, araliphatically and/or aromatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 1,5-diisocyanato-2,2-dimethylpentane, 2,2,4- or 2,4,4-trimethyl-1,6-diisocyanatohexane, 1,8-diisocyanatooctane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates.

And most preferred, the aliphatic polyisocyanate compound (A-1) is at least one compound selected from the group consisting of 1,5-diisocyanatopentane (pentamethylene diisocyanate, PDI), 1,6-diisocyanatohexane (hexamethylene diisocyanate, HDI), 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI).

A mixture of two or more of the aforementioned polyisocyanate compounds (A-1) can also be used.

As used herein, the term "polyepoxide compound" is meant to denote compounds having two or more epoxide groups

In a preferred embodiment of the invention, the polyepoxide compound (B) is an aliphatic polyepoxide compound (B-1) and/or aromatic polyepoxide compound (B-2), preferably aliphatic polyepoxide compound (B-1).

In a preferred embodiment of the invention, the epoxide compound (B) is at least one compound selected from the group consisting of resorcinol diglycidyl ether, neopentyl glycol diglycidyl ether, 1,6-hexanediol diglycidyl ether, 1,4-butandiol diglycidyl ether, hydrogenated bisphenol A diglycidyl ether, bisphenol A diglycidyl ether, bisphenol-F diglycidyl ether, bisphenol-S diglycidyl ether, 9,9-bis(4-glycidyloxy phenyl)fluorine, tetrabromo bisphenol A diglycidyl ether, tetrachloro bisphenol A diglycidyl ether , tetramethyl bisphenol A diglycidyl ether, tetramethyl bisphenol-F diglycidyl ether, tetramethyl bisphenol-S diglycidyl ether, diglycidyl terephthalate, diglycidyl o-phthalate, trimellitic acid triglycidyl ester, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, polybutadiene diepoxide, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, limonene diepoxide, the diepoxides of double unsaturated fatty acid C1 - C18 alkyl esters, polyepoxides of double unsaturated ethoxylated fatty alcohols, 2-dihydroxybenzene diglycidyl ether, 1,4-dihydroxybenzene diglycidyl ether, 4,4'-(3,3,5-trimethylcyclohexyliden)bisphenyl diglycidyl ether and diglycidyl isophthalate, tetrabromobisphenol A diglycidyl ether, cardanol-based diglycidyl ether, Hydrochinone diglycidyl ether, 4,4'-dihydroxy benzene diglycidyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether, as well as chlorinated and brominated varieties of the aforementioned components.

Aliphatic di- or polyglycidyl ether, derived via epoxidation of di- or polyfunctional alcohols with aliphatic linear, aliphatic branched, or cycloaliphatic moieties consisting of 2-40 carbon atoms, for example ethanediol diglycidyl ether, propanediol diglycidyl ether, isosorbide diglycidyl ether, , octanediol diglycidyl ether, trimethylolpropane polyglycidyl ether, glycerol polyethylene triglycidyl ether, 2-ethyl hexyl diglycidyl ether.

More preferred the polyepoxide compound (B) is selected from the group consisting of neopentyl glycol diglycidyl ether, hydrogenated bisphenol A diglycidyl ether, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, the diepoxides of double unsaturated fatty acid C1 - C18 alkyl esters, polyepoxides of double unsaturated ethoxylated fatty alcohols, Aliphatic di- or polydiglycidyl ether, derived via epoxidation of di- or polyfunctional alcohols with aliphatic linear, aliphatic branched, or cycloaliphatic moieties consisting of 2-40 carbon atoms, for example ethanediol diglycicyl ether, propanediol diglycidyl ether, , 1,4-butanediol diglycidyl ether, 1,6-hexanediol diglycidyl ether, octanediol diglycidyl ether, trimethylolpropane polyglycidyl ether, glycerol polyethylene triglycidyl ether, 2-ethyl hexyl diglycidyl ether, isosorbide diglycidyl ether, bisphenol A diglycidyl ether, bisphenol-F diglycidyl ether, bisphenol-S diglycidyl ether.

Most preferred the polyepoxide compound (B) is selected from the group consisting of ethanediol diglycidyl ether, butanediole diglycidyl ether, hexane diol diglycidyl ether, trimethylopropane triglycidyl ether.

A mixture of two or more of the aforementioned polyepoxide compounds (B) can also be used.

As used herein, the term "aliphatic polyepoxide compound" is meant to denote compounds having two or more epoxide groups and also aromatic moieties.

In a preferred embodiment of the invention the polyepoxide compound (B) is an aliphatic polyepoxide compound (B-1).

In a preferred embodiment of the invention, the aliphatic polyepoxide compound (B-1) is one or more compound(s) and is selected from the group consisting of neopentyl glycol diglycidyl ether, hydrogenated bisphenol A diglycidyl ether, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, the diepoxides of double unsaturated fatty acid C1 - C18 alkyl esters, polyepoxides of double unsaturated ethoxylated fatty alcohols, Aliphatic di- or polydiglycidyl ether, derived via epoxidation of di- or polyfunctional alcohols with aliphatic linear, aliphatic branched, or cycloaliphatic moieties consisting of 2-40 carbon atoms, for example ethanediol diglycicyl ether, propanediol diglycidyl ether, 1,4-butanediol diglycidyl ether, 1,6-hexanediol diglycidyl ether, octanediol diglycidyl ether, trimethylolpropane polyglycidyl ether, glycerol polyethylene triglycidyl ether, 2-ethyl hexyl diglycidyl ether, isosorbide diglycidyl ether.

In a more preferred embodiment of the invention, the aliphatic polyepoxide compound (B-1) is one or more compound(s) and is selected from the group consisting of hydrogenated bisphenol A diglycidyl ether, polyethylene glycol diglycidyl ether, polypropylene glycol diglycidyl ether, glycerol triglycidyl ether, polyglycidyl ether of ethoxylated trimethylolpropane, poly(tetramethylene-oxid) diglycidyl ether, pentaeritrol polyglycidyl ether, the diepoxides of double unsaturated fatty acid C1 - C18 alkyl estersAliphatic di- or polydiglycidyl ether, derived via epoxidation of di- or polyfunctional alcohols with aliphatic linear, aliphatic branched, or cycloaliphatic moieties consisting of 2-40 carbon atoms, for example ethanediol diglycicyl ether, 1,4-butanediol diglycidyl ether, 1,6-hexanediol diglycidyl ether, trimethylolpropane polyglycidyl ether, glycerol polyethylene triglycidyl ether, 2-ethyl hexyl diglycidyl ether, isosorbide diglycidyl ether.

Most preferred the aliphatic polyepoxide compound (B-1) is one or more compound(s) and is selected from the group consisting of ethanediol diglycidyl ether, butanediole diglycidyl ether, hexane diol diglycidyl ether, trimethylopropane triglycidyl ether.

A mixture of two or more of the aforementioned aliphatic polyepoxide compounds (B-1) can also be used.

As used herein, the term "aromatic polyepoxide compound" is meant to denote compounds having two or more epoxide groups and also aromatic moieties.

In an alternative preferred embodiment of the invention the polyepoxide compound (B) is an aromatic polyepoxide (B-2).

In a preferred embodiment of the invention, aromatic polyepoxide compound (B-2) is one or more compound(s) and is selected from the group consisting of resorcinol diglycidyl ether, bisphenol A diglycidyl ether, bisphenol-F diglycidyl ether, bisphenol-S diglycidyl ether, 9,9-bis(4-glycidyloxy phenyl)fluorine, tetrabromo bisphenol A diglycidyl ether, tetrachloro bisphenol A diglycidyl ether , tetramethyl bisphenol A diglycidyl ether, tetramethyl bisphenol-F diglycidyl ether, tetramethyl bisphenol-S diglycidyl ether, diglycidyl terephthalate, diglycidyl o-phthalate, trimellitic acid triglycidyl ester, 1,4-cyclohexane dicarboxylic acid diglycidyl ester, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate, tetrabromobisphenol A, cardanol-based diglycidyl ether, Hydrochinone diglycidyl ether, 4,4'-dihydroxyphenyl diglycicdyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether, as well as chlorinated and brominated varieties of the aforementioned components.

In a more preferred embodiment of the invention, aromatic polyepoxide compound (B-2) is one or more compound(s) and is selected from the group consisting of bisphenol A diglycidyl ether, bisphenol-F diglycidyl ether, bisphenol-S diglycidyl ether, tetramethyl bisphenol A diglycidyl ether, tetramethyl bisphenol-F diglycidyl ether, tetramethyl bisphenol-S diglycidyl ether, diglycidyl terephthalate, diglycidyl o-phthalate, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate, cardanol-based diglycidyl ether, Hydrochinone diglycidyl ether, 4,4'-dihydroxyphenyl diglycicdyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether.

In a more preferred embodiment of the invention, aromatic polyepoxide compound (B-2) is one or more compound(s) and is selected from the group consisting of bisphenol A diglycidyl ether, bisphenol-F diglycidyl ether, bisphenol-S diglycidyl ether, tetramethyl bisphenol A diglycidyl ether, tetramethyl bisphenol-F diglycidyl ether, tetramethyl bisphenol-S diglycidyl ether, diglycidyl terephthalate, 2-dihydroxybenzene diglycidyl ether, 1,4-dihydroxybenzene diglycidyl ether, diglycidyl isophthalate, cardanol-based diglycidyl ether, Hydrochinone diglycidyl ether, 4,4'-dihydroxyphenyl diglycicdyl ether.

In a more preferred embodiment of the invention, aromatic polyepoxide compound (B-2) is one or more compound(s) and is selected from the group consisting of bisphenol A diglycidyl ether, bisphenol-F diglycidyl ether, bisphenol-S diglycidyl ether, 2-dihydroxybenzene diglycidyl ether, 1,4-dihydroxybenzene diglycidyl ether, diglycidyl isophthalate. A mixture of two or more of the aforementioned aromatic polyepoxide compounds (B-2) can also be used.

In a first alternative preferred embodiment of the invention the polyisocyanate compound (A) is an aliphatic polyisocyanate compound (A-1) and the polyepoxide compound (B) is an aliphatic polyepoxide compound (B-1).

In a second alternative preferred embodiment of the invention the polyisocyanate compound (A) is an aliphatic polyisocyanate compound (A-1) and the polyepoxide compound (B) is an aromatic polyepoxide compound (B-2).

In a third alternative preferred embodiment of the invention the polyisocyanate compound (A) is an aromatic polyisocyanate compound (A-2) and the polyepoxide compound (B) is an aliphatic polyepoxide compound (B-1).

In a fourth alternative preferred embodiment of the invention the polyisocyanate compound (A) is an aromatic polyisocyanate compound (A-2) and the polyepoxide compound (B) is an aromatic polyepoxide compound (B-2).

A mixture of one or more of the aforementioned aliphatic polyisocyanates (A-1), aromatic polyisocyanate compound (A-2), aliphatic polyepoxide compound (B-1) and/or aromatic polyepoxide compound (B-2) can also be used.

In a preferred embodiment of the invention, the molar ratio of epoxy groups of the polyepoxide compound (B) to the isocyanate groups of the polyisocyanate compound (A) is from 2.6:1 to 7:1, preferably from 2.7:1 to 6:1 more preferably from 2.8:1 to 5:1. If the latter molar ratio is higher than 7:1, resulting epoxy-terminated oxazolidinones, the oxazolidinone group ratio in the overall mixture is diluted by the epoxy compound (B) in such a way that the mixture will not give a significant benefit in the final polymer, compared to only using the epoxy compound (B) in further polymerization applications.

In a preferred embodiment of the invention, the process comprises the steps:
i) Mixing the polyisocyanate compound (A), the polyepoxide compound (B) and the catalyst (C) forming a mixture (i);
ii) Copolymerizing the mixture (i)

In an alternative preferred embodiment of the invention, the process comprises the steps:
alpha) Mixing the polyepoxide compound (B) and at least a part of the catalyst (C) forming a mixture (alpha);
beta) Addition of the polyisocyanate compound (A) to the mixture (alpha) at copolymerization conditions.

In a further alternative, less-preferred embodiment of the invention, the process comprises the steps:
gamma) Mixing the polyisocyanate compound (A) and at least a part of the catalyst (C) forming a mixture (gamma);
delta) Addition of the polyepoxide compound (B) to the mixture (gamma) at copolymerization conditions.

The conditions for the copolymerization process at elevated temperatures and temperatures are explained above.

In a preferred embodiment of the invention the catalyst (C) is at least one compound selected from the group consisting LiCl, LiBr, LiI, MgCl2, MgBr2, MgI2, SmI3, Ph4SbBr, Ph4SbCl, Ph4PBr, Ph4PCl, Ph3(C6H4-OCH3)PBr, Ph3(C6H4-OCH3)PCl, Ph3(C6H4F)PCl, and Ph3(C6H4F)PBr, preferred LiCl, LiBr, LiI and MgCl2.

In a more preferred embodiment of the invention the catalyst (C) is selected from the group consisting of LiCl, LiBr, and LiI.

In a more preferred embodiment of the invention the catalyst (C) is LiCl.

In one embodiment of the method according to the invention, the catalyst (C) is present in a molar amount of 0.001 to 2.0 mol-%, preferably in an amount of 0.01 to ≤ 1.5 mol-%, more preferred ≥ 0.05 to ≤ 1.0 mol-%, based on the polyepoxide compound (B).

A solvent (D) and in particular the solvent (D-1) is defined in alignment to the general definition as a substance that dissolves a solute, i.e. compound (A), compound (B) and/or compound (C) but does not (chemically) react with compound (A), compound (B) and the catalyst (C), in particular the polyisocyanate compound (A).

According to the inventive process, the copolymerization is operated in the absence of an additional solvent (D-1) with a boiling point higher than 170 °C, preferred, 165 °C, more preferred 160°C, most preferred 150 °C at 1 bar (absolute).

These additional solvents (D-1) are for example organic solvents such as linear or branched alkanes or mixtures of alkanes, mono or polysubstituted halogenated aromatic solvents or halogenated alkane solvents, for example, 1,2-dichlorobenzene, linear or cyclic ester, or polar aprotic solvents such as cyclic carbonate, such as ethylencarbonate or propylencarbonate, *N*-methylpyrrolidone (NMP), sulfolane, tetramethylurea, *N*,*N'*-dimethylethylenurea or mixtures of the above mentioned solvents and/or with other solvents. These solvents (D-1) are in particular 1,2-dichlorobenzene, sulfolane and *N*-methylpyrrolidone (NMP).

In a preferred embodiment of the invention the copolymerization is operated in the absence of an additional solvent (D) which is an advantage since no additional energy-intensive and time-consuming solvent removal process, e.g. distillation, is necessary.

In an embodiment of the invention the calculated mass ratio of the sum of diisocyanate compound (A), the bisepoxide compound (B), and catalyst (C) with respect to the sum of diisocyanate compound (A), the bisepoxide compound (B), the catalyst (C), and the solvent (D) is in the range from 40 wt-% to 100 wt-%, preferred from 50 wt-% to 100 wt-% and more preferred from 60 wt-% to 100 wt-%. The upper mass ratio of 100 wt-% means applying no solvent (D), and leads to a most energy-efficient process since no solvent needs to be separated. The lower mass ratio of 40 wt-% leads to higher amount of solvent (D) optionally comprising that needs to be separated and potentially purified. This leads to a less efficient overall process due to no energy savings.

Another aspect of the present invention is an epoxy-group terminated polyoxazolidinone, obtainable by a method according to the invention.

In an embodiment of the invention, the polyoxazolidinones have epoxy equivalent weights (EEW) of from 100 g/eq to 5000 g/eq, preferable of from 150 g/eq to 3000 g/eq more preferred of from 200 g/eq to 1500 g/eq, wherein the epoxy equivalent weight was measured with a Metrohm 888 Titrando using a potentiometric hydrochloric acid titration. The epoxy sample was added to a 250 mL beaker and then mixed with tetrabutylammonium bromide (TBAB) in glacial acetic acid (64.5 g/L). Then the solution was titrated with a peracetic acid (0.1 mol/L) until after the equivalent point.

The epoxy-equivalent weight (EEW) of the polyoxazolidinone-group containing prepolymers is defined as the total mass of the substance that contains 1 equivalent of epoxy groups.

In a first embodiment the invention is related to a process for producing an epoxy-group terminated polyoxazolidinones comprising the copolymerization of a polyisocyanate compound (A) with two or more isocyanate groups with a polyepoxide compound (B) with two or more epoxy groups in the presence of a catalyst (C);
wherein the molar ratio of the epoxy groups of the polyepoxide compound (B) to the isocyanate groups of the polyisocyanate compound (A) is larger than 2:1 and less than 25:1;
wherein the catalyst (C) is at least one compound selected from the group consisting of
Li(I), Rb(I), Cs(I), Ag(I), Au(I),
Mg(II), Ca(II), Sr(II), Ba(II), Dy(II), Yb(II), Cu(II), Zn(II), V(II), Mo(II), Mn(II), Fe(II), Co(II) Ni(II), Pd(II), Pt(II), Ge(II), Sn(II),
Sc(III), Y(III), La(III), Ce(III), Pr(III), Nd(III), Sm(III), Eu(III), Gd(III), Tb(III), Dy(III), Ho(III), Er(III), Tm(III), Yb(III), Lu(III), Hf(III), Nb(III), Ta(III), Cr(III), Ru(III), Os(III), Rh(III), Ir(III), Al(III), Ga(III), In(III), Tl(III), Ge(III),
Ce(IV), Ti(IV), Zr(IV), Hf(IV), Nb(IV), Mo(IV), W(IV), Ir(IV), Pt(IV), Sn(IV), Pb(IV),
Nb(V), Ta(V), Bi(V),
Mo(VI), W(VI), and
compounds represented by the formula (I)

[M(R1)(R2)(R3)(R4)]+n Yn- (I)

wherein M is phosphorous or antimony, preferred phosphorous
wherein (R1), (R2), (R3), (R4) are independently of one another selected from the group comprising linear or branched alkyl groups containing 1 to 22 carbon atoms, optionally substituted with heteroatoms and/or heteroatom containing substituents, cycloaliphatic groups containing 3 to 22 carbon atoms, optionally substituted with heteroatoms and/or heteroatom containing substituents, C1 to C3 alkyl-bridged cycloaliphatic groups containing 3 to 22 carbon atoms, optionally substituted with heteroatoms and/or heteroatom containing substituents and aryl groups containing 6 to 18 carbon atoms, optionally substituted with one or more alkyl groups containing 1 to 10 carbon atoms and/or heteroatom containing substituents and/or heteroatoms,
wherein Y is a halide, carbonate, nitrate, sulfate or phosphate anion, more preferred a halide or carbonate and
wherein n is an integer of 1, 2 or 3;
and wherein the copolymerization is operated in the absence of an additional solvent (D-1) with an boiling point higher than 170 °C, preferred, 165 °C, more preferred 160°C most preferred 150 °C at 1 bar (absolute).

In a second embodiment the invention is related to the process according to the first embodiment, wherein the copolymerization is operated in the absence of an additional solvent (D).

In a third embodiment the invention is related to the process according to the first or second embodiment, wherein the molar ratio of epoxy groups of the polyepoxide compound (B) to the isocyanate groups of the polyisocyanate compound (A) is from 2.6:1 to 7:1, preferably from 2.7:1 to 6:1 more preferably from 2.8:1 to 5:1.

In a fourth embodiment the invention is related to the process according to any of the first to third embodiment, wherein the polyisocyanate compound (A) is an aliphatic polyisocyanate compound (A-1), and/or an aromatic polyisocyanate compound (A-2), preferable an aromatic polyisocyanate compound (A-2).
In a fifth embodiment the invention is related to the process according to any of the first to fourth embodiment, wherein the polyepoxide compound (B) is an aliphatic polyepoxide compound (B-1) and/or aromatic polyepoxide compound (B-2), preferably aliphatic polyepoxide compound (B-1). In a sixth embodiment the invention is related to the process according to any of the first to fifth embodiment, wherein the polyisocyanate compound (A) is an aliphatic polyisocyanate compound (A-1) and the polyepoxide compound (B) is an aliphatic polyepoxide compound (B-1).
In a seventh embodiment the invention is related to the process according to any of the first to fifth embodiment, wherein the polyisocyanate compound (A) is an aliphatic polyisocyanate compound (A-1) and the polyepoxide compound (B) is an aromatic polyepoxide compound (B-2).
In an eighth embodiment the invention is related to the process according to any of the first to fifth embodiment, wherein the polyisocyanate compound (A) is an aromatic polyisocyanate compound (A-2) and the polyepoxide compound (B) is an aliphatic polyepoxide compound (B-1).
In a ninth embodiment the invention is related to the process according to any of the first to fifth embodiment, wherein the polyisocyanate compound (A) is an aromatic polyisocyanate compound (A-2) and the polyepoxide compound (B) is an aromatic polyepoxide compound (B-2).
In a tenth embodiment the invention is related to the process according to any of the first to ninth embodiment, wherein the catalyst (C) is at least one compound selected from the group consisting of LiCl, LiBr, LiI, MgCl2, MgBr2, MgI2, SmI3, Ph4SbBr, Ph4SbCl, Ph4PBr, Ph4PCl, Ph3(C6H4-OCH3)PBr, Ph3(C6H4-OCH3)PCl, Ph3(C6H4F)PCl, and Ph3(C6H4F)PBr, preferred LiCl, LiBr, and LiI and most preferred LiCl.
In a eleventh embodiment the invention is related to the process according to any of the first to tenth embodiment, wherein the catalyst (C) is used in a molar amount of 0.001 to 2.0 mol-%, preferably in an amount of 0.01 to ≤ 1.5 mol-%, more preferred ≥ 0.05 to ≤ 1.0 mol-%, based on the polyepoxide compound (B)..

In a twelfth embodiment the invention is related to the process according to any of the first to eleventh embodiment comprising the steps:
i) Mixing the polyisocyanate compound (A), the polyepoxide compound (B) and the catalyst (C) forming a mixture (i);
ii) Copolymerizing the mixture (i).

In a thirteenth embodiment the invention is related to the process according to any of the first to eleventh embodiment comprising the steps:
alpha) Mixing the polyepoxide compound (B) and at least part of the catalyst (C) forming a mixture (alpha);
beta) Addition of the polyisocyanate compound (A) to the mixture (alpha) at copolymerization conditions.

In a fourteenth embodiment the invention is related to an epoxy-group terminated polyoxazolidinone obtainable according any of the first to thirteenth embodiment.

In a fifteenth embodiment the invention is related to an epoxy-group terminated polyoxazolidinone according to the fourteenth embodiment with an epoxy equivalent weight (EEW) of from 100 g/eq to 5000 g/eq, preferable of from 150 g/eq to 3000 g/eq wherein the epoxy equivalent weight was measured with a Metrohm 888 Titrando using a potentiometric hydrochloric acid titration. The epoxy sample was added to a 250 mL beaker and then mixed with tetrabutylammonium bromide (TBAB) in glacial acetic acid (64.5 g/L). Then the solution was titrated with a peracetic acid (0.1 mol/L) until after the equivalent point.

In a sixteenth embodiment the invention is related to the process according to any of the first to eleventh embodiment comprising the steps:
gamma) Mixing the polyisocyanate compound (A) and at least a part of the catalyst (C) forming a mixture (gamma);
delta) Addition of the polyepoxide compound (B) to the mixture (gamma) at copolymerization conditions.

### Examples

The present invention will be further described with reference to the following examples without wishing to be limited by them.

### Diisocyanate compound (A)

- MDI:: Methylene diphenyl diisocyanate (MDI 1806), >99 %, Covestro AG, Germany.

### Epoxide compound (B)

- B-I:: Araldite DY-D/CH Butanediol diglycidyl ether (BDDE), EEW 118-125 g/eq; was obtained from HUNTSMAN Advanced Materials (Deutschland) GmbH, Germany.
- B-II:: Araldite DY 026 Butanediol diglycidyl ether (BDDE), EEW 110-115 g/eq (higher purity), was obtained from HUNTSMAN Advanced Materials (Deutschland) GmbH, Germany.

### Catalyst (C)

- LiCl: Lithium chloride, purity >99 %, was obtained from Sigma Aldrich, Germany.

### Solvents (D)

- o-DCB: Ortho-dichlorobenzene , purity 99 %, anhydrous, was obtained from Sigma-Aldrich, Germany.
- Sul: Sulfolane, purity ≥99 %, anhydrous, was obtained from Sigma-Aldrich, Germany.

MDI, LiCl, BDDE were used as received without further purification. Sulfolane was used after melting at 50°C and drying over molecular sieves. o-DCB were dried over molecular sieves prior to use.

### Addition Protocols

Batch Protocol: All components are weighted into a glass flask, which is put into an oil bath pre-heated to 175°C and stirred immediately.

Semi-batch Protocol: The catalyst (C) and diepoxide (B) are provided in a glass flask and heated to 175°C. The diisocyanate compound is added to the reactor containing the catalyst (C) dissolved in the diepoxide compound while the mixture is continuously stirred.

### Characterization of polyoxazolidinone prepolymers

### IR

IR analyses were performed on a Bruker ALPHA-P IR spectrometer equipped with a diamond probe head. The software OPUS 6.5 was used for data treatment. A background spectrum was recorded against ambient air. Thereafter, a small sample of the polyoxazolidinone prepolymer (2 mg) was applied to the diamond probe and the IR spectrum recorded averaging over 24 spectra obtained in the range of 4000 to 400 cm⁻¹ with a resolution of 4 cm⁻¹.

### Epoxy Equivalent Weight (EEW)

The epoxy equivalent weight was measured with a Metrohm 888 Titrando using a potentiometric hydrochloric acid titration. The epoxy sample was added to a 250 mL beaker and then mixed with tetrabutylammonium bromide (TBAB) in glacial acetic acid (64.5 g/L). Then the solution was titrated with a peracetic acid (0.1 mol/L) until after the equivalent point.

### GPC

GPC measurements were performed at 40 °C in tetrahydrofuran (THF, flow rate of 1.0 mL min⁻¹). The column set consisted of 3 consecutive columns (PSS SDV, 5 µm, 8x50 mm precolumn, 2 PSS SDV linear S, 5 µm, 8x300 mm). Samples (concentration 2-3 g L⁻¹, injection volume 20 µL) were injected employing an Agilent technologies 1200 series auto sampler. An RID detector of the Agilent 1200 series was used to follow the concentration at the exit of the column. Raw data were processed using the PSS WinGPC Unity software package. Polystyrene of known molecular weight was used as reference to calculate the molecular weight distribution (PSS ReadyCal Kit in an area of 266 Da to 66.000 Da was used). The number average molecular weight measured by GPC is denominated as Mₙ (GPC) in the examples.

Color index according to Gardner scala:
The Gardner color index was determined by using a Lico 690 from Hach. Therefore, sample of the product mixture was filled into a cuvette which was subsequently analyzed following the DIN EN ISO 1557.

### Viscosity Measurements:

The viscosity values were determined via a cone/plate rheometer from Anton Paar MCR 302. A ramp of shear rates reaching from 10 - 600 1/min was used to determine the viscosity of the products. The viscosity is given in the unit mPa·s, following the procedure according to DIN EN ISO 3219/A.3.

### Reactor

Under a continuous flow of argon, the reactions were performed in a 100 ml two-neck roundbottom flask. A syringe pump (KD Scientific Inc.) was connected to the flask to add the diisocyanate compound to the catalyst (C) dissolved in the diepoxide compound.

*Example 1: Synthesis of epoxy-terminated polyoxazolidinone-based prepolymers with Araldite DY-D*/*CH as compound (B-I) and with MDI 1806 as compound (A) using LiCl as compound (C) according to the Batch Protocol with molar ratio of epoxy groups to isocyanate groups of 4:1.*

A reactor as previously described was charged with LiCl (0.059 g, 1.4 mmol), MDI 1806 (12.51 g, 50 mmol) and Araldite DY-D/CH (40.45 g, 200 mmol). The reactor was closed and inertized with argon. The mixture was stirred (400 rpm) and heated to 175 °C. After 3.5 h, the reaction mixture was allowed to cool to room temperature.

The completion of the reaction was confirmed by the absence of the isocyanate band (2260 cm⁻¹) in the IR spectrum from the reaction mixture.

In the IR spectrum the characteristic signal for the oxazolidinone carbonyl group was observed at 1749 cm⁻¹.

In the IR spectrum the characteristic signal for isocyanurate groups was not observed.

The EEW was determined to be 250 g/eq.

The analysis of the molecular weight with GPC showed an average molecular weight of 533 g·mol⁻¹ and a Polydispersity Index of 3.42.

The color index was determined to be 8.2 on the Gardner scale.

The viscosity of the product was determined to be 6720 mPa·s.

*Example 2: Synthesis of epoxy-terminated polyoxazolidinone-based prepolymers with Araldite DY 026 as compound (B-II) and with MDI 1806 as compound (A) using LiCl as compound (C) according to the Batch Protocol with molar ratio of epoxy groups to isocyanate groups of 4.3:1.*

A reactor as previously described was charged with LiCl (0.052 g, 1.23 mmol), MDI 1806 (10.3 g, 41 mmol) and Araldite DY 026 (35.6 g, 176 mmol). The reactor was closed and inertized with argon. The mixture was stirred (400 rpm) and heated to 175 °C. After 3.5 h, the reaction mixture was allowed to cool to room temperature.

The completion of the reaction was confirmed by the absence of the isocyanate band (2260 cm⁻¹) in the IR spectrum from the reaction mixture.

In the IR spectrum the characteristic signal for the oxazolidinone carbonyl group was observed at 1749 cm⁻¹.

In the IR spectrum the characteristic signal for isocyanurate groups was not observed.

The EEW was determined to be 217 g/eq.

The analysis of the molecular weight with GPC showed an average molecular weight of 473 g·mol⁻¹ and a Polydispersity Index of 2.67.

The color index was determined to be 7.4 on the Gardner scale.

The viscosity of the product was determined to be 1880 mPa·s.

*Example 3: Synthesis of epoxy-terminated polyoxazolidinone-based prepolymers with Araldite DY*/*D-CH as compound (B-I) and with MDI 1806 as compound (A) using LiCl as compound (C) according to the Semi-Batch Protocol with molar ratio of epoxy groups to isocyanate groups of 4:1.*

A reactor as previously described was charged with LiCl (0.03 g, 0.7 mmol) and Araldite DY/D-CH (20.23 g, 100 mmol). The reactor was closed an inertized with argon. The mixture was stirred (400 rpm) and heated to 175 °C. After 10 minutes at this temperature, MDI 1806 (6.25 g, 25 mmol) as compound (A) was added at a rate of 1 mL/min. After 3.5 h, the reaction mixture was allowed to cool to room temperature.

The completion of the reaction was confirmed by the absence of the isocyanate band (2260 cm⁻¹) in the IR spectrum from the reaction mixture.

In the IR spectrum the characteristic signal for the oxazolidinone carbonyl group was observed at 1749 cm⁻¹.

In the IR spectrum the characteristic signal for isocyanurate groups was not observed.

The EEW was determined to be 247 g/eq.

The analysis of the molecular weight with GPC showed an average molecular weight of 416 g·mol⁻¹ and a Polydispersity Index of 3.37.

The color index was determined to be 9.1 on the Gardner scale.

The viscosity of the product was determined to be 4790 mPa·s.

*Example 4: Synthesis of epoxy-terminated polyoxazolidinone-based prepolymers with Araldite DY-D*/*CH as compound (B-I) and with MDI 1806 as compound (A) using LiCl as compound (C) according to the Batch Protocol with molar ratio of epoxy groups to isocyanate groups of 4:1 in the presence of a mixture of ortho-dichlorobenzene and sulfolane as compound (D).*

A reactor as previously described was charged with LiCl (0.045 g, 1.05 mmol), MDI 1806 (9.38 g, 37.5 mmol), Araldite DY-D/CH (30.34 g, 150 mmol) *ortho*-dichlorobenzene (8.3 mL) and sulfolane (2.5 mL). The reactor was closed and inertized with argon. The mixture was stirred (400 rpm) and heated to 175 °C. After 3.5 h, the reaction mixture was allowed to cool to room temperature.

The completion of the reaction was confirmed by the absence of the isocyanate band (2260 cm⁻¹) in the IR spectrum from the reaction mixture.

In the IR spectrum the characteristic signal for the oxazolidinone carbonyl group was observed at 1749 cm⁻¹.

In the IR spectrum the characteristic signal for isocyanurate groups was not observed.

The EEW was determined to be 322 g/eq.

In order to remove the solvent, the mixture was heated to 200°C, above the boiling point of o-DCB, for 5 h. In the course of this treatment, the sample turned highly viscous and showed an intensified color.

The analysis of the molecular weight with GPC showed an average molecular weight of 508 g·mol⁻¹ and a Polydispersity Index of 3.23 before the distillation and an average molecular weight of 638 g·mol⁻¹ and a Polydispersity Index of 6.0 after the distillation.

The color index was determined to be 8.0 on the Gardner scale before distillation and 8.4 on the Garndner scale after distillation

The viscosity of the product was determined to be 569 mPa·s before the distillation and 74,200 mPa·s after the distillation.

*Example 5: Synthesis of epoxy-terminated polyoxazolidinone-based prepolymers with Araldite DY*/*D-CH as compound (B-I) and with MDI 1806 as compound (A) using LiCl as compound (C) according to the Batch Protocol with molar ratio of epoxy groups to isocyanate groups of 3:1.*

A reactor as previously described was charged with LiCl (0.052 g, 1.23 mmol), MDI 1806 (14.7 g, 58.7 mmol) and Araldite DY-D/CH (35.6 g, 176 mmol). The reactor was closed and inertized with argon. The mixture was stirred (400 rpm) and heated to 175 °C. After 3.5 h, the reaction mixture was allowed to cool to room temperature.

The completion of the reaction was confirmed by the absence of the isocyanate band (2260 cm⁻¹) in the IR spectrum from the reaction mixture.

In the IR spectrum the characteristic signal for the oxazolidinone carbonyl group was observed at 1749 cm⁻¹.

In the IR spectrum the characteristic signal for isocyanurate groups was not observed.

The EEW was determined to be 323 g/eq.

The analysis of the molecular weight with GPC showed an average molecular weight of 581 g·mol⁻¹ and a Polydispersity Index of 3.78.

The color index was determined to be 10.4 on the Gardner scale.

The viscosity of the product was determined to be 68,600 mPa·s.

*Example 6: Synthesis of epoxy-terminated polyoxazolidinone-based prepolymers with Araldite DY*/*D-CH as compound (B-I) and with MDI 1806 as compound (A) using LiCl as compound (C) according to the Batch Protocol with molar ratio of epoxy groups to isocyanate groups of 2:1.*

A reactor as previously described was charged with LiCl (0.052 g, 1.23 mmol), MDI 1806 (22.0 g, 88 mmol) and Araldite DY-D/CH (35.6 g, 176 mmol). The reactor was closed and inertized with argon. The mixture was stirred (400 rpm) and heated to 175 °C. After 10 minutes, the reaction was stopped due to solidification of the reaction mixture.

In the IR spectrum the characteristic signal for the oxazolidinone carbonyl group was observed at 1749 cm⁻¹, along with a lot of other peaks indicating side products

The determination of the EEW was not possible.

The analysis of the molecular weight with GPC was not possible.

The color index was determined to be > 18 and consequently out of the range of the Gardner scale.

**Table: Comparison of the results of Examples 1 to 6:**

| Example | Compound | | | | Molar Ratio epoxy groups: isocyanate groups | (m(A)+m(B)+m(C))/ (m(A)+m(B)+m(C)+ m(D)) [wt-%] | Reaction mode | Mn | D | EEW | Viscosity | Site products IR | Gardner Color |
|---|---|---|---|---|---|---|---|---|---|---|---|---|---|
| A | (A) | (B) | (C) | (D) | | | | [g/mol] | | [g/eq] | [mPa·s] | | |
| 1 | MDI | BDDE (Araldite DY-D) | LiCl | - | 4:1 | 100 | batch | 533 | 3.42 | 250 | 6720 | No | 8.2 |
| 2 | MDI | BDDE (Araldite DY 026) | LiCl | - | 4.3:1 | 100 | batch | 473 | 2.67 | 217 | 1880 | No | 7.4 |
| 3 | MDI | BDDE (Araldite DY-D) | LiCl | - | 4:1 | 100 | Semi-batch | 416 | 3.37 | 247 | 4790 | No | 9.1 |
| 4 (Comp.) | MDI | BDDE (Araldite DY-D) | LiCl | o-DCB/S ul | 4:1 | <100 | batch | 508 | 3.23 | 322 | 569 | No | 8.0 |
| 4 (Comp.) Dest. | MDI | BDDE (Araldite DY-D) | LiCl | - | 4:1 | Dest. | batch | 638 | 6.00 | - | 74200 | No | 8.4 |
| 5 | MDI | BDDE (Araldite DY-D) | LiCl | - | 3:1 | 100 | batch | 581 | 3.78 | 323 | 68600 | No | 10.4 |
| 6 (Comp.) | MDI | BDDE (Araldite DY-D) | LiCl | - | 2:1 | 100 | Semi- batch | - | - | - | solid | Yes | - |

| | | | | | | | | | | | | | |
|---|---|---|---|---|---|---|---|---|---|---|---|---|---|
| Batch: All components are weighted into a glass flask, which is put into an oil bath pre-heated to 175°C and stirred immediately. Semi-batch: The catalyst (C) and diepoxide (B) are provided in a glass flask and heated to 175°C. The diisocyanate compound is added to the reactor containing the catalyst (C) dissolved in the diepoxide compound while the mixture is continuously stirred. | | | | | | | | | | | | | |

## Claims

1. A process for producing an epoxy-group terminated polyoxazolidinone comprising the copolymerization of a polyisocyanate compound (A) with two or more isocyanate groups with a polyepoxide compound (B) with two or more epoxy groups in the presence of a catalyst (C);
wherein the molar ratio of the epoxy groups of the polyepoxide compound (B) to the isocyanate groups of the polyisocyanate compound (A) is larger than 2:1 and less than 25:1;
wherein the catalyst (C) is at least one compound selected from the group consisting of Li(I), Rb(I), Cs(I), Ag(I), Au(I),
Mg(II), Ca(II), Sr(II), Ba(II), Dy(II), Yb(II), Cu(II), Zn(II), V(II), Mo(II), Mn(II), Fe(II), Co(II)
Ni(II), Pd(II), Pt(II), Ge(II), Sn(II),
Sc(III), Y(III), La(III), Ce(III), Pr(III), Nd(III), Sm(III), Eu(III), Gd(III), Tb(III), Dy(III), Ho(III),
Er(III), Tm(III), Yb(III), Lu(III), Hf(III), Nb(III), Ta(III), Cr(III), Ru(III), Os(III), Rh(III), Ir(III),
Al(III), Ga(III), In(III), Tl(III), Ge(III),
Ce(IV), Ti(IV), Zr(IV), Hf(IV), Nb(IV), Mo(IV), W(IV), Ir(IV), Pt(IV), Sn(IV), Pb(IV), Nb(V), Ta(V), Bi(V),
Mo(VI), W(VI), and
compounds represented by the formula (I)
[M(R1)(R2)(R3)(R4)]+n Yn- (I)
wherein M is phosphorous or antimony, preferred phosphorous
wherein (R1), (R2), (R3), (R4) are independently of one another selected from the group comprising linear or branched alkyl groups containing 1 to 22 carbon atoms, optionally substituted with heteroatoms and/or heteroatom containing substituents, cycloaliphatic groups containing 3 to 22 carbon atoms, optionally substituted with heteroatoms and/or heteroatom containing substituents, C1 to C3 alkyl-bridged cycloaliphatic groups containing 3 to 22 carbon atoms, optionally substituted with heteroatoms and/or heteroatom containing substituents and aryl groups containing 6 to 18 carbon atoms, optionally substituted with one or more alkyl groups containing 1 to 10 carbon atoms and/or heteroatom containing substituents and/or heteroatoms,
wherein Y is a halide, carbonate, nitrate, sulfate or phosphate anion, more preferred a halide or carbonate and
wherein n is an integer of 1, 2 or 3;
and wherein the copolymerization is operated in the absence of an additional solvent (D-1) with a boiling point higher than 170 °C, preferred, 165 °C, more preferred 160°C, and most preferred 150 °C at 1 bar (absolute).

2. The process according to claim 1, wherein the copolymerization is operated in the absence of an additional solvent (D).

3. The process according to claim 1 or 2, wherein the molar ratio of epoxy groups of the polyepoxide compound (B) to the isocyanate groups of the polyisocyanate compound (A) is from 2.6:1 to 7:1, preferably from 2.7:1 to 6:1 more preferably from 2.8:1 to 5:1.

4. The process according to one of claim 1 to 3, wherein the polyisocyanate compound (A) is an aliphatic polyisocyanate compound (A-1), and/or an aromatic polyisocyanate compound (A-2), preferable an aromatic polyisocyanate compound (A-2).

5. The process according to one of claim 1 to 4, wherein the polyepoxide compound (B) is an aliphatic polyepoxide compound (B-1) and/or aromatic polyepoxide compound (B-2), preferably aliphatic polyepoxide compound (B-1).

6. The process according to one of claim 1 to 5, wherein the polyisocyanate compound (A) is an aliphatic polyisocyanate compound (A-1) and the polyepoxide compound (B) is an aliphatic polyepoxide compound (B-1).

7. The process according to one of claim 1 to 5, wherein the polyisocyanate compound (A) is an aliphatic polyisocyanate compound (A-1) and the polyepoxide compound (B) is an aromatic polyepoxide compound (B-2).

8. The process according to one of claim 1 to 5, wherein the polyisocyanate compound (A) is an aromatic polyisocyanate compound (A-2) and the polyepoxide compound (B) is an aliphatic polyepoxide compound (B-1).

9. The process according to one of claim 1 to 5, wherein the polyisocyanate compound (A) is an aromatic polyisocyanate compound (A-2) and the polyepoxide compound (B) is an aromatic polyepoxide compound (B-2).

10. The process according to any one of claims 1 to 9, wherein the catalyst (C) is at least one compound selected from the group consisting of LiCl, LiBr, LiI, MgCl2, MgBr2, MgI2, SmI3, Ph4SbBr, Ph4SbCl, Ph4PBr, Ph4PCl, Ph3(C6H4-OCH3)PBr, Ph3(C6H4-OCH3)PCl, Ph3(C6H4F)PCl, and Ph3(C6H4F)PBr, preferred LiCl, LiBr, and LiI and most preferred LiCl.

11. The process according to any one of claims 1 to 10, wherein the catalyst (C) is used in a molar amount of 0.001 to 2.0 mol-%, preferably in an amount of 0.01 to ≤ 1.5 mol-%, more preferred ≥ 0.05 to ≤ 1.0 mol-%, based on the polyepoxide compound (B).

12. The process according to any one of claims 1 to 11 comprising the steps:
i) Mixing the polyisocyanate compound (A), the polyepoxide compound (B) and the catalyst (C) forming a mixture (i);
ii) Copolymerizing the mixture (i)

13. The process according to any one of claims 1 to 11 comprising the steps:
alpha) Mixing the polyepoxide compound (B) and at least part of the catalyst (C) forming a mixture (alpha);
beta) Addition of the polyisocyanate compound (A) to the mixture (alpha) at copolymerization conditions.

14. An epoxy-group terminated polyoxazolidinone obtainable according to any of claims 1 to 13.

15. An epoxy-group terminated polyoxazolidinone according to claim 14 with an epoxy equivalent weight (EEW) of from 100 g/eq to 5000 g/eq, preferable of from 150 g/eq to 3000 g/eq more preferred of from 200 g/eq to 1500 g/eq wherein the epoxy equivalent weight was measured with a Metrohm 888 Titrando using a potentiometric hydrochloric acid titration. The epoxy sample was added to a 250 mL beaker and then mixed with tetrabutylammonium bromide (TBAB) in glacial acetic acid (64.5 g/L). Then the solution was titrated with a peracetic acid (0.1 mol/L) until after the equivalent point.
